(19) Europäisches Patentamt
European Patent Office
Office européen des brevets

(11) **EP 1 834 934 B1**

(12) **EUROPÄISCHE PATENTSCHRIFT**

(45) Veröffentlichungstag und Bekanntmachung des Hinweises auf die Patenterteilung:
**06.05.2015 Patentblatt 2015/19**

(51) Int Cl.:
***C03C 17/36*** *(2006.01)*

(21) Anmeldenummer: **06075647.5**

(22) Anmeldetag: **17.03.2006**

(54) **Wärmedämmendes transparentes Schichtsystem**

Transparent heat-insulating multilayer coating system

Système transparent, thermo-isolant multicouche

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**19.09.2007 Patentblatt 2007/38**

(73) Patentinhaber: **Fraunhofer-Gesellschaft zur Förderung der angewandten Forschung e.V. 80686 München (DE)**

(72) Erfinder:
• **Pflug, Andreas**
**38124 Braunschweig (DE)**
• **Szyszka, Bernd**
**38108 Braunschweig (DE)**
• **Ulrich, Stephan**
**30167 Hannover (DE)**
• **Graf, Roman, Dr.,**
**4600 Olten (CH)**

(56) Entgegenhaltungen:
US-A- 5 085 926     US-A- 5 935 702
US-A1- 2004 028 955     US-A1- 2005 145 480
US-B1- 6 833 194

**Beschreibung**

Seit Ende der 70'er Jahre sind wärmedämmende Schichtsysteme bekannt, die im Wesentlichen aus einer alternierenden Folge von dielektrischen und metallischen Schichten bestehen, welche bevorzugt mit dem Verfahren des Magnetron-Sputterns auf ein transparentes Substrat abgeschieden werden. Die metallischen Schichtkomponenten sind semi-transparent und werden durch die angrenzenden dielektrischen Schichten zusätzlich entspiegelt. Aufgrund der elektrischen Flächenleitfähigkeit resultiert ein geringes Emissionsvermögen des beschichteten Substrates, so dass dieses z. B. für Wärmeisolier-Verglasungen eingesetzt werden kann, bei denen der Wärmeverlust infolge Strahlung aufgrund des geringen Emissionsvermögens der Beschichtung minimiert wird.

Die dielektrischen Schichtkomponenten werden bevorzugt durch Magnetron-Sputtern mit Zugabe von Sauerstoff als Reaktivgas hergestellt. Es ist bekannt, dass beim Magnetron-Sputtern mit Sauerstoffzugabe negativ geladene Sauerstoffionen an der oxidierten Sputtertarget-Oberfläche entstehen können, die infolge der Katodenfallspannung eine kinetische Energie von mehreren hundert Elektronenvolt aufnehmen und nahezu ohne Energieverlust auf dem Substrat eintreffen können. Es ist auch bekannt, dass metallische Schichten, insbesondere dünne Silberschichten eine hohe Oberflächenenergie besitzen und bei Erwärmung bzw. anderweitigem Energieeintrag dazu neigen, in Tröpfchenform überzugehen, dieser Vorgang wird als Agglomeration bezeichnet.

Aus diesem Grund muss eine dünne Metallschicht bei der Aufbringung nachfolgender dielektrischer Schichten vor Ionenbombardment geschützt werden, da ansonsten die Wärmedämmfunktion nicht gewährleistet werden kann. Die Patentschrift US4548691A von Leybold geht als eine der ersten Erfindungen auf diese Problematik ein, indem hier eine Silberschicht von zwei Metalloxidschichten, insbesondere $SnO_2$, umgeben ist und zwischen der Silberschicht und der auf der Silberschicht befindlichen Metalloxidschicht eine zwischen 1-5 nm dicke metallische Zwischenschicht vorgesehen ist. Durch diese Zwischenschicht wird das Silber beim reaktiven Sputtern der nachfolgenden $SnO_2$-Deckschicht vor Ionenbombardment geschützt.

Ein ähnliches Konzept zeigt die Patentschrift US4894290A von Pilkington. Hier ist eine von zwei Metalloxidschichten umgebene Silberschicht zusätzlich unmittelbar von beiden Seiten von zusätzlichen Metallschichten mit hoher Sauerstoff-Affinität eingekapselt. Die Schichtdicke der zusätzlichen Metallschichten ist so gewählt, dass das Silber bei einem Vorspannprozess mit Temperaturen von ca. 650 °C für ca. 10 min vor Oxidation geschützt wird. Während dieses Vorspannprozesses oxidieren die zusätzlichen Metallschichten nach, so dass die Lichttransmission des Gesamtschichtsystems durch den Vorspannprozess zunimmt. In diesem Fall wird durch das Vorspannen eine starke Änderung des optischen Eindrucks bewirkt, so dass diese Schichten nur im vorgespannten Zustand Anwendung als Fassadenelement finden können. Analoge Konzepte finden sich in der Patentschrift EP1060140B1 von Interpane, wobei das Silber hier mit einer weiteren metallischen Komponente mit hoher Sauerstoff-Affinität, bevorzugt Aluminium, legiert wird. Die Legierungskomponente dringt beim Vorspannen an die Grenzflächen zwischen der Silberschicht und den benachbarten Metalloxiden und schützt somit das Silber vor Oxidation. Ähnlich beansprucht das Patent EP999192B1 von Leybold ein vorspannbares, wärmedämmendes Schichtsystem, bei dem innerhalb der Silberschicht eine dünne NiCr-Schicht eingebettet ist, die ähnlich wie beim vorigen Patent während des Vorspannprozesses an die Grenzflächen der Silberschicht diffundiert.

Die hier genannten Konzepte haben den Nachteil, dass der optische Eindruck des nicht-vorgespannten Schichtsystems stark von dem des vorgespannten Schichtsystems differiert, was durch die zusätzlichen, stark absorbierenden, unedlen Metallkomponenten verursacht wird.

Um dieses Problem zu umgehen, werden in einer Reihe von Patenten Metallnitride als Schutzschichten gegen Oxidation der Silberschicht eingesetzt, exemplarisch genannt sei die Patentschrift US6623846B2 von Guardian in der NiCrN-Schichten zum Schutz der Silberschicht eingesetzt werden, während die relativ neue Anmeldung EP1529761A1 von Arcon bevorzugt Aluminiumnitrid für diesen Zweck einsetzt. Ein Nachteil dieser Verfahren ist, dass ein anfangs stöchiometrisches Metallnitrid beim Vorspannen zumindest teilweise nachoxidiert und somit wiederum mit Änderungen des optischen Eindrucks des Gesamtschichtsystems zu rechnen ist.

Ein weiterer Aspekt neben dem Schutz der Metallschicht während der Beschichtung und während thermischer Belastung ist die Gewährleistung einer optimierten und reproduzierbaren elektrischen Leitfähigkeit, da nicht nur die Wärmedämmfähigkeit sondern auch die sichtbare Transmission direkt von der Leitfähigkeit und insbesondere von der Elektronenbeweglichkeit in der Metallschicht beeinflusst wird.

In der Patentschrift EP803481B1 von PPG wird gezeigt, dass die Leitfähigkeit einer Silberschicht (a) stark mit der Güte ihrer Kristallstruktur korreliert ist und dass (b) die Kristallstruktur der Silberschicht von einer als »Keimschicht« fungierenden, unterhalb der Silberschicht befindlichen dielektrischen Schicht mit Vorzugskristallorientierung vorgegeben werden kann. Als Keimschicht kommt hierbei bevorzugt ZnO, allgemein jedoch jedes beliebige Material mit Vorzugskristallorientierung zum Einsatz. Der Aspekt der Silber-Kristallinität wird explizit auch in der Patentschrift EP488048B1 von Asahi Glass behandelt. Ähnliche Ansätze, die über obigen Ansatz in Form von Mehrfachschichtsystemen als Keimschicht hinausgehen, finden sich in der Patentschrift EP1007756B1 von Pilkington sowie EP678484B1 von Saint-Gobain.

Problematisch an diesen Verfahren ist, dass die Kristallstruktur von z. B. einer auf ZnO basierenden Keimschicht sehr empfindlich von den Prozessbedingungen während der Abscheidung dieser Keimschicht abhängt, da hierfür der reaktive Sputterprozess in der Nähe des Übergangsbereiches zwischen oxidischem und metallischem Mode eingestellt werden muss. Durch Abnutzung der Sputtertargets sowie durch Stabilitätsprobleme aufgrund der Nähe des Arbeitspunktes zum Übergangsbereich können hinsichtlich der Kristallstruktur der Keimschicht Reproduzierbarkeitsprobleme entstehen, die sich in Form einer schlechten Reproduzierbarkeit des Flächenwiderstands der nachfolgenden Silberschicht und somit auch einer schlechten Reproduzierbarkeit der Lichttransmission äußern.

Insgesamt ist ein Trend zu hochtransparenten, vorspannbaren, wärmedämmenden Schichtsystemen mit hoher Flächenleitfähigkeit zu verzeichnen. Bisher gibt es jedoch noch kein wärmedämmendes Schichtsystem basierend auf in Dielektrika eingebetteten Metallschichten, bei welchem eine Unterscheidung des vorgespannten und nicht-vorgespannten zustands ohne technische Hilfsmittel unmöglich ist (Diese Eigenschaft wird im folgenden mit dem Begriff "farbstabil" bezeichnet).

Aufgabe der vorliegenden Erfindung ist es deswegen, ein wärmedämmendes Schichtsystem mit einem transparenten Substrat zu schaffen, bei welchem keine sichtbare Unterscheidung zwischen vorgespanntem und nichtvorgespanntem Zustand möglich ist.

Diese Aufgabe wird durch ein Schichtsystem nach dem unabhängigen Anspruch gelöst.

Dadurch, dass die Funktionsschicht zumindest einseitig unmittelbar mit einer Metalloxinitridschicht bedeckt ist, ist es möglich, transparente Schichtsystem zu schaffen, welche zumindest für das menschliche Auge farbstabil sind.

Im Gegensatz zu einer reinen Metallnitridschicht werden durch eine Metalloxinitridschicht die durch den Vorspannprozess bedingten Änderungen in den optischen Konstanten drastisch reduziert. Dennoch ist ein hinreichender Schutz der metallischen Funktionsschicht vor Ionenbombardment in Beschichtungsprozessen sowie vor Oxidation während des Vorspannprozesses gegeben. Die Metalloxinitridschicht wirkt als besonders effektiver "Blocker", der eine Diffusion von Atomen oder Ionen in die Funktionsschicht unterdrückt. Insbesondere kann mit einer erfindungsgemäßen Metalloxinitridschicht neben dem Schutz der Funktionsschicht während der Beschichtung und während thermischer Belastung auch eine optimierte und reproduzierbare elektrische Leitfähigkeit der Funktionsschicht gewährleistet werden.

Mit geeigneter Materialwahl der übrigen dielektrischen Schichten ermöglicht diese Erfindung die Herstellung einer hochtransparenten, niedrigemittierenden Beschichtung, bei der ohne technische Hilfsmittel anhand des visuellen Erscheinungsbilds zwischen dem vorgespannten und dem nicht-vorgespannten Zustand nicht unterschieden werden kann.

Vorzugsweise ist die Metalloxinitridschicht amorph. Grundsätzlich sind aber auch teilkristalline oder kristalline Metalloxinitridschichten möglich. Letztere zeichnen sich jedoch erfahrungsgemäß durch eine höhere Schicht-Eigenspannung und durch verringerten Schutz vor Diffusion aus.

Es ist insbesondere möglich, beidseitig der Funktionsschicht eine Metalloxinitridschicht unmittelbar aufzubringen. Auf diese weise kann vorder- und rückseitig der Funktionsschicht eine ungewünschte Diffusion von Atomen oder Ionen in die Funktionsschicht unterdrückt werden.

Auch ist es möglich, dass ein erfindungsgemäßes Schichtsystem eine alternierende Folge von nicht nur einer, sondern mehreren Funktionsschichten mit Metalloxinitridschicht bzw. -Schichten und dielektrischen Schichten aufweist.

Die erfindungsgemäßen Schichtsysteme lassen sich beispielsweise als Fensterscheiben, Isolierverglasungen oder Sicherheitsglas verwenden.

Ausdrücklich wird darauf hingewiesen, dass neben einem nicht-vorgespannten Schichtsystem gleichermaßen auch ein vorgespanntes Schichtsystem von dem erfindungsgemäßen Schichtsystem mit eingeschlossen sein soll.

Vorteilhafte Weiterbildungen der Erfindung werden in den abhängigen Ansprüchen beschrieben.

Eine vorteilhafte weiterbildung des Schichtsystems sieht vor, dass die Metalloxinitridschicht der Art ist, dass sich der Anteil der Komponenten während einer thermischen Behandlung, insbesondere während eines Vorspannprozesses, nicht wesentlich ändert.

Dies ist ein wesentliches Charakteristikum der erfindungsgemäßen Blockerschicht, d.h., der Metalloxinitridschicht, das die Farbstabilität während des Vorspannprozesses gewährleistet. Trotz extremer Bedingungen beim Vorspannprozess ändert sich währenddessen die chemische Zusammensetzung einer erfindungsgemäßen Metalloxinitridschicht nur unwesentlich.

Eine weitere vorteilhafte Weiterbildung des Schichtsystems sieht vor, dass die Metalloxinitridschicht einen bezogen auf die Stoffmenge relativen Sauerstoffanteil von 10% bis 50%, vorzugsweise 20% bis 40% aufweist.

Eine weitere vorteilhafte Weiterbildung des Schichtsystems sieht vor, dass die Metalloxinitridschicht einen bezogen auf die Stoffmenge relativen Stickstoffanteil von 10% bis 50%, vorzugsweise 20% bis 40% aufweist.

Die angegebenen Wertebereiche für die Stoffmenge des Stickstoffs und des Sauerstoffs der Metalloxinitridschicht geben die Bereiche wieder, in denen die Wirkung der der Metalloxinitridschicht besonders vorteilhaft ist.

Eine weitere vorteilhafte Weiterbildung des Schichtsystems sieht vor, dass die Metalloxinitridschicht für Licht mit einer Wellenlänge größer als 500nm einen Extinktionskoeffizienten $k(\lambda) < 0.5$, vorzugsweise $k(\lambda) < 0.3$, aufweist.

Eine weitere vorteilhafte Weiterbildung des Schichtsystems sieht vor, dass die Metalloxinitridschicht eine Dicke von 0,5 nm bis 3 nm, vorzugsweise von 1 nm bis 2 nm, aufweist.

Angegebene Wertebereiche der Dicke geben die Bereiche wieder, in denen die Metalloxinitridschicht vorteilhaft ihre Funktion als Blocker erfüllt, die Transparenz des Schichtsystems aber nicht unnötig stark erniedrigt.

Eine weitere vorteilhafte Weiterbildung des Schichtsystems sieht vor, dass die Metalloxinitridschicht aus Nioboxinitrid besteht.

Alternativ lassen sich auch andere Materialien, beispielsweise Al, Ti, Ni, NiCr, möglicherweise aber mit einer verminderten Wirkung, verwenden.

Die Funktionsschicht besteht aus Silber oder aus Gold.

Eine weitere vorteilhafte Weiterbildung des Schichtsystems sieht vor, dass das Substrat aus Floatglas besteht.

Alternativ kann das Substrat beispielsweise auch ein Fahrzeugglas sein.

Eine weitere vorteilhafte Weiterbildung des Schichtsystems sieht vor, dass das Schichtsystem derart ausgebildet ist, dass die durch den Vorspannprozess hervorgerufene Farbwertänderung $\Delta E:=(\Delta L^2+\Delta a^{*2}+\Delta b)^{*2})1/2$ nach DIN 5033-3 sowohl in Reflexion als auch in Transmission <3, bevorzugt <2, besonders bevorzugt <1.0 ist.

Die Erfindung wird im folgenden anhand zweier Ausführungsbeispiele,; welche mehrere Figuren einschließen, näher erläutert. Dabei zeigt:

Figur 1    den Absorptionsindex verschiedener als Blocker verwendbaren Schichten,

Figur 2    die Auswirkung von verschiedenen Blockerschichten auf die Lichttransmission eines Schichtsystems,

Figur 3    das Reflexions- und Transmissionsspektrum eines Einfach-Ag-Low-E-System mit Nb-Blocker, und

Figur 4    das Reflexions- und Transmissionsspektrum eines erfindungsgemäßen Einfach-Ag-Low-E-System mit einem Metalloxinitrid-Blocker.

In einem ersten Ausführungsbeispiel soll gezeigt werden, dass sich mit einer erfindungsgemäßen Metalloxinitridschicht, in diesem Falle Nioboxinitrid, als Blocker und Silber als Funktionsschicht ein erfindungsgemäßes Schichtsystem mit einem Aufbau Glas / Haftschicht / Funktionsschicht / Blocker / Deckschicht verwirklichen lässt, dass farbstabil ist, d.h., die durch thermisches Vorspannen resultierenden Änderungen in Lichttransmission und Reflexionsfarbe minimiert sind.

In einem ersten Schritt wurden drei für einen Ag-Blocker in Frage kommende Materialien - Nb, NbN und $NbO_xN_y$ - mittels reaktiven DC-Sputterns unter Zugabe von Ar und geeigneten Anteilen von $O_2$ und $N_2$ als Schichten hergestellt. Die mittels Dektak-Verfahren ermittelten Schichtdicken lagen im Bereich von 50-70 nm.

Die Nb-Schicht bestand, bezogen auf die Stoffmenge, aus einem relativen Anteil von 100% Nb und hatte eine Schichtdicke von 55nm.

Die NbN-Schicht bestand, bezogen auf die Stoffmenge, aus einem relativen Anteil von 51% Nb und 49% N und hatte eine Schichtdicke von 70nm.

Die $NbN_xO_y$-Schicht bestand, bezogen auf die Stoffmenge, aus einem relativen Anteil von 41% Nb, 32% O und 27% N, und hatte eine Schichtdicke von 58nm.

Durch Messung von Ellipsometrie-, Reflexions- und Transmission-Spektren im sichtbaren Wellenlängenbereich nebst anschließender punktweiser Anpassung wurden die drei Extinktionskoeffizienten dieser Einzelschichten ermittelt.

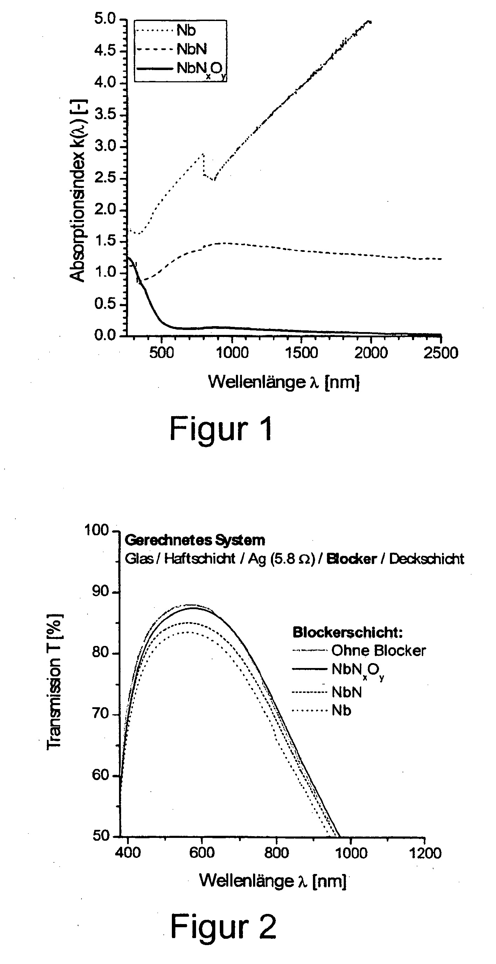

Figur 1 zeigt die durch spektrale Vermessung ermittelte dielektrische Funktion bzw. den Extinktionskoeffizienten der Einzelschichten aus Nb, NbN und $NbN_xO_y$ als Funktion der Wellenlänge in einem gemeinsamen Diagramm.

Mit diesen Messwerten wurde die Lichttransmission einer Standard Einfach-Ag-Low-E-Schicht, die aus den Schichten - Substrat / dielektrische Haftschicht / Ag / Blocker /dielektrische Deckschicht - besteht, gerechnet. Hierfür wurden die ermittelten optischen Kenndaten jeweils für eine 1.0 nm dicke Blockerschicht auf der Ag-Schicht mit einem Ag-Flächenwiderstand von 5.8 $\Omega$ eingesetzt. Als Substrat wurde ein Floatglas gewählt. Zur Berechnung kam hier der in B. Harbecke, Appl. Phys. B39 (1986), s. 165-170 vorgestellte Algorithmus zur Ermittlung der kohärenten und inkohärenten Transmission bzw. Reflexion an parallelen Vielfachschichtsystemen zum Einsatz. Dieser Algorithmus ist Stand der Technik und wird in zahlreichen kommerziellen und nicht-kommerziellen Softwareprogrammen verwendet. Zum Vergleich wurde auch das Spektrum einer Low-E-Schicht ohne Blockerschicht gerechnet

Figur 2 zeigt die Auswirkung von genannten 1.0 nm dicken Blockerschichten auf Ag mit in Figur 1 gezeigten dielektrischen Funktionen auf die Lichttransmission in dem Einfach-Ag-Low-E-System auf Floatglas.

Die zusätzlich durch einen entsprechenden Blocker verursachte Absorption ergab gemäß der Rechnung für Nb im Schichtsystem eine maximale Absorption von 4,6%, für NbN eine Absorption von 3.0%, und für $NbN_xO_y$ eine Absorption von 0.6%.

Im Ergebnis sieht man, dass sowohl das reine Metall Nb als auch das Metallnitrid NbN als Blockerschicht eine signifikante Absorptionserhöhung relativ zur Schicht ohne Blocker von 4.6% bzw. 3.0% in einem Einfach-Silber-Low-E-Schichtsystem bewirkt. Durch die erfindungsgemäße Verwendung eines Metalloxinitrids hingegen kann der Beitrag der Blockerschicht zur Gesamtabsorption auf lediglich 0.6% reduziert werden.

Beim Vorspannen ändert sich die Transmission derartiger Schichtsysteme. Aufgrund dessen, dass bei der Nioboxinitridschicht eine Absorptionsänderung von höchstens 0.6% erreicht werden kann, ist zu erwarten, dass die durch thermisches Vorspannen hervorgerufenen Farbänderungen aufgrund Veränderungen in der Blockerschicht vom menschlichen Auge nicht mehr festgestellt werden können.

In einem zweitem Ausführungsbeispiel wurde, um die Funktionalität einer Metalloxinitrid-Blockerschicht in einem Low-E-Schichtsystem zu testen, jeweils ein Schichtsystem der Form

```
Glas / Grundschichtsystem / Silber (hier 10 nm) /
Blocker (hier 1 nm) / Deckschichtsystem
```

hergestellt. Als Glas wurde ein Floatglas verwendet. Als Blocker kamen $NbN_xO_y$ sowie zum Vergleich eine rein-metallische Nb-Schicht zum Einsatz. Die $NbN_xO_y$-Schicht war amorph und bestand dabei, bezogen auf die Stoffmenge, aus einem relativen Anteil von 41% Nb, 32% O und 27% N. Als Grundschichtsystem wurde ein für Entspiegelung und Diffusionsschutz geeignetes Metalloxid, als Deckschicht ein für Entspiegelung und Kratzschutz geeignetes Metalloxid verwendet.

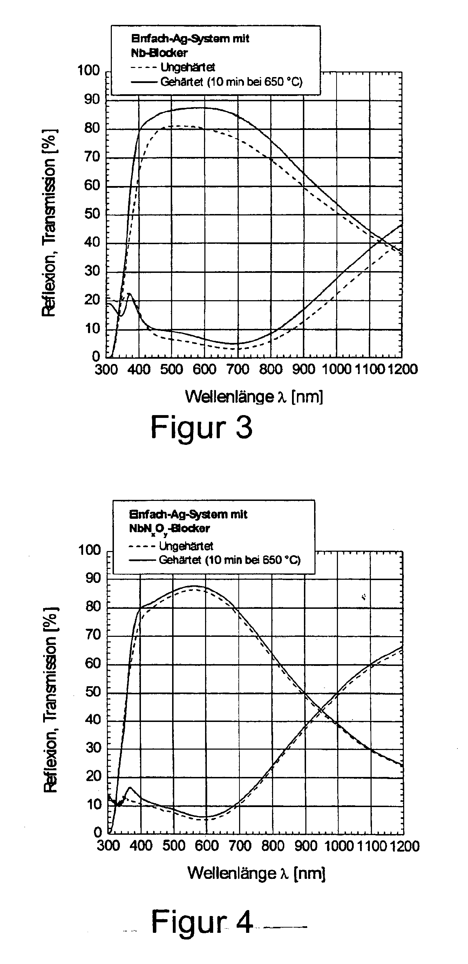

Figur 3 zeigt das Reflexions- und Transmissionsspektrum eines derartigen ungehärteten und gehärteten/vorgespannten Einfach-Ag-Low-E-Systems mit Nb-Blocker.

Figur 4 zeigt das Reflexions- und Transmissionsspektrum eines derartigen ungehärteten und gehärteten Einfach-Ag-Low-E-Systems mit $NbN_xO_y$-Blocker.

Aus der Messung ergeben sich folgende optische Kenndaten und Farbkoordinaten von Einfach-Ag-Low-E-Schichtsystemen:

(i) metallischer Nb-Blockerschicht
Nb, ungehärtet: $T_v$ (EN410) [%] = 80.6; L* = 27.8; a* = -0.4; b* = -11.7;
Nb, gehärtet: $T_v$ (EN410) [%] = 87.1; L* = 33.7; a* = -3.5; b* = -8.1; $\Delta E^*_{ab}$ = 4.75; Haze [%] = 0.45;

(ii) $NbN_xO_y$-Blockerschicht
$NbN_xO_y$, ungehärtet: $T_v$ (EN410) [%] = 85.4; L* = 29.6;
a* = 2.59; b* = -10.73;
$NbN_xO_y$, gehärtet: $T_v$ (EN410) [%] = 86.8; L* = 32.2;
a* = 2.61; b* = -10.46; $\Delta E^*_{ab}$ = 0.27; Haze [%] = 0.2;

Demnach werden bei dem Schichtsystem mit konventioneller, metallischer Blockerschicht aufgrund des thermischen Härtens starke Änderungen in der sichtbaren Transmission- und Reflexion beobachtet. So steigt die nach der Norm EN410 berechnete Lichttransmission um 6.5 % an, während die Reflexionsfarbe eine sichtbare Änderung um $\Delta E^*_{ab}$ = 4.75 zeigt.

Hingegen fällt die Änderung im spektralen Verhalten im Falle der Einfach-Ag-Low-E-Schicht mit dem erfindungsgemäßen $NbN_xO_y$-Blocker sichtlich geringer aus. Die Auswertung ergibt eine Transmissionserhöhung um lediglich 1.4 % sowie einen Farbshift in Reflexion von $\Delta E^*_{ab}$ = 0.27 (Schichtseite). Der Anteil der Komponenten der Nioboxinitridschicht ändert sich dabei während des Vorspannprozesses, insbesondere im Vergleich zu einer reinen Metallnitridschicht als Blocker, nur unwesentlich, hier um höchstens wenige Prozente.

Damit ist es mit dem menschlichen Auge unmöglich, gehärtete und ungehärtete Glasscheiben, die mit diesem erfindungsgemäßen Schichtsystem versehen sind, voneinander zu unterscheiden.

Neben der Verringerung der Änderung der optischen Kenndaten erweist sich der Metalloxinitrid-Blocker überraschend auch von Vorteil hinsichtlich der Schutzfunktion für die Silberschicht. Das Einfach-Ag-Low-E-System dieses Ausführungsbeispiels mit $NbN_xO_y$-Blocker ist neben der verschwindend geringen Farbänderung auch dadurch ausgezeichnet, dass es nach dem Härtungsprozess hinsichtlich der Silberleitfähigkeit und Oberflächenmorphologie nahezu defektfrei ist. Dagegen weist das gehärtete System mit Nb-Blocker bereits mit dem Lichtmikroskop deutlich erkennbare Defekte auf, die auf lokal beginnende Delamination der Silberschicht schließen lassen und zu einer signifikanten Erhöhung der optischen Lichtstreuung (siehe oben angegebener Haze-Wert) führen.

Selbstverständlich sind auch andere Ausführungsformen eines erfindungsgemäßen Schichtsystems möglich, beispielsweise durch die Wahl anderer Materialien, anderer Dicken, anderer Zusammensetzungen etc.

Ausdrücklich soll aber erwähnt werden, dass es auch möglich ist, erfindungsgemäße Schichtsysteme mit einer alternierenden Folge von dielektrischen Schichten und Funktionschichten herzustellen, beispielsweise ein Schichtsystem mit den Schichten Substrat / 1. Dielektrikum / Funktionsschicht / Blocker / 2. Dielektrikum / Funktionsschicht / Blocker / 3. Dielektrikum.

Ebenfalls soll erwähnt werden, dass Grundschicht und Deckschicht jeweils auch aus mehreren Schichten bestehen können.

Zum in diesem Ausführungsbeispiel genannten Vorspannen kann das Floatglas durch Erhitzen auf Temperaturen von ca. 570-750 °C für einen Zeitraum von ca. 5-15 min und anschließendes schockartiges Abkühlen transformiert werden, und zusätzlich über einen längeren Zeitraum bei Temperaturen von ca. 570-750 °C thermisch gebogen werden.

Die erfindungsgemäßen Schichtsysteme können zur Beschichtung von beliebigen Glasscheiben, z.B. Floatglas, insbesondere für Fensterscheiben und Automobilverglasungen verwendet werden. Hierzu können beschichtete Glasscheiben zu Isolierverglasungen sowie zu ebenen oder gebogenen Sicherheitsverglasungen, sowie zu laminierten Sicherheitsglas weiterverarbeitet werden.


## Patentansprüche

1. Wärmedämmendes Schichtsystem mit einem transparentem Substrat, mindestens einer metallischen, infrarotreflektierenden Funktionsschicht sowie mindestens zwei dielektrischen Schichten, wobei die Funktionsschicht zwischen zwei dielektrischen Schichten liegt, und die Funktionsschicht zumindest einseitig unmittelbar mit einer Metalloxinitridschicht bedeckt ist, **dadurch gekennzeichnet, dass** die Funktionsschicht aus Silber oder aus Gold besteht, wobei eine visuelle Unterscheidung eines vorgespannten Zustands des Schichtsystems von einem nicht vorgespannten Zustand des Schichtsystems nicht ohne technische Hilfsmittel möglich ist.

2. Schichtsystem nach Anspruch 1, **dadurch gekennzeichnet, dass** die Metalloxinitridschicht einen bezogen auf die Stoffmenge relativen Sauerstoffanteil von 10 Mol-% bis 50 Mol-%, vorzugsweise 20 Mol-% bis 40 Mol-% aufweist.

3. Schichtsystem nach einem der vorhergehenden Ansprüche, **dadurch gekennzeichnet, dass** die Metalloxinitridschicht einen bezogen auf die Stoffmenge relativen Stickstoffanteil von 10 Mol-% bis 50 Mol-%, vorzugsweise 20 Mol-% bis 40 Mol-% aufweist.

4. Schichtsystem nach einem der vorhergehenden Ansprüche, **dadurch gekennzeichnet, dass** die Metalloxinitridschicht für Licht mit einer Wellenlänge größer als 500nm einen Extinktionskoeffizienten $k(l) < 0.5$, vorzugsweise $k(l) < 0.3$, aufweist.

5. Schichtsystem nach einem der vorhergehenden Ansprüche, **dadurch gekennzeichnet, dass** die Metalloxinitridschicht eine Dicke von 0,5 nm bis 3 nm, vorzugsweise von 1 nm bis 2 nm aufweist.

6. Schichtsystem nach einem der vorhergehenden Ansprüche, **dadurch gekennzeichnet, dass** die Metalloxinitridschicht aus Nioboxinitrid besteht.

7. Schichtsystem nach einem der vorhergehenden Ansprüche, **dadurch gekennzeichnet, dass** die Funktionsschicht aus Silber besteht.

8. Schichtsystem nach einem der vorhergehenden Ansprüche, **dadurch gekennzeichnet, dass** das Substrat aus Floatglas besteht.

9. Schichtsystem nach einem der vorhergehenden Ansprüche, **dadurch gekennzeichnet, dass** das Schichtsystem derart ausgebildet ist, dass die durch den Vorspannprozess hervorgerufene Farbwertänderung $DE := (DL^2 + Da^{*2} + Db^{*2})^{1/2}$ nach DIN 5033-3 sowohl in Reflexion als auch in Transmission <3, bevorzugt <2, besonders bevorzugt <1.0 ist.

10. Wärmedämmendes Schichtsystem nach einem der vorhergehenden Ansprüche, **dadurch gekennzeichnet, dass** die Metalloxinitridschicht amorph ist.


## Claims

1. A heat-insulating layer system with a transparent substrate, at least one metallic, infrared-reflecting function layer and at least two dielectric layers, wherein the function layer lies between two dielectric layers, and the function layer is covered, at least on one side, directly with a metal oxynitride layer, **characterised in that** the function layer consists of silver or of gold, it not being possible to distinguish visually between a prestressed condition of the layer system and a non-prestressed condition of the layer system without technical aids.

2. A layer system according to Claim 1, **characterised in that** the metal oxynitride layer has a proportion of oxygen, relative to the amount of substance, of 10 mole % to 50 mole %, preferably 20 mole % to 40 mole %.

3. A layer system according to one of the preceding claims, **characterised in that** the metal oxynitride layer has a proportion of nitrogen, relative to the amount of substance, of 10 mole % to 50 mole %, preferably 20 mole % to 40 mole %.

4. A layer system according to one of the preceding claims, **characterised in that** the metal oxynitride layer has an extinction coefficient k(l) < 0.5, preferably k(l) < 0.3, for light with a wavelength of greater than 500 nm.

5. A layer system according to one of the preceding claims, **characterised in that** the metal oxynitride layer has a thickness of 0.5 nm to 3 nm, preferably of 1 nm to 2 nm.

6. A layer system according to one of the preceding claims, **characterised in that** the metal oxynitride layer consists of niobium oxynitride.

7. A layer system according to one of the preceding claims, **characterised in that** the function layer consists of silver.

8. A layer system according to one of the preceding claims, **characterised in that** the substrate consists of float glass.

9. A layer system according to one of the preceding claims, **characterised in that** the layer system is formed such that the tristimulus value change $DE := (DL^2 + Da^{*2} + Db^{*2})^{1/2}$ in accordance with DIN 5033-3 which is brought about by the prestressing process, both in reflexion and in transmission, is < 3, preferably < 2, particularly preferably < 1.0.

10. A heat-insulating layer system according to one of the preceding claims, **characterised in that** the metal oxynitride layer is amorphous.


**Revendications**

1. Système de couches isolant thermique, comportant un substrat transparent, au moins une couche fonctionnelle métallique réfléchissant les infrarouges, ainsi qu'au moins deux couches diélectriques, la couche fonctionnelle étant disposée entre deux couches diélectriques, et la couche fonctionnelle étant, au moins sur une face, directement recouverte d'une couche d'oxynitrure de métal, **caractérisé en ce que** la couche fonctionnelle est constituée d'argent ou d'or, une distinction visuelle entre un état précontraint du système de couches et un état non-précontraint du système de couches n'étant pas possible sans auxiliaires techniques.

2. Système de couches selon la revendication 1, **caractérisé en ce que** la couche d'oxynitrure de métal présente une teneur relative en oxygène, par rapport à la quantité de matière, de 10 à 50 % en moles, de préférence de 20 à 40 % en moles.

3. Système de couches selon l'une des revendications précédentes, **caractérisé en ce que** la couche d'oxynitrure de métal présente une proportion relative d'azote, par rapport à la quantité de matière, de 10 à 50 % en moles, de préférence de 20 à 40 % en moles.

4. Système de couches selon l'une des revendications précédentes, **caractérisé en ce que** la couche d'oxynitrure de métal présente, pour une lumière ayant une longueur d'onde supérieure à 500 nm, un coefficient d'extinction k(l) < 0,5, de préférence k(l) < 0,3.

5. Système de couches selon l'une des revendications précédentes, **caractérisé en ce que** la couche d'oxynitrure de métal a une épaisseur de 0,5 à 3 nm, de préférence de 1 à 2 nm.

6. Système de couches selon l'une des revendications précédentes, **caractérisé en ce que** la couche d'oxynitrure de métal est constituée d'oxynitrure de niobium.

7. Système de couches selon l'une des revendications précédentes, **caractérisé en ce que** la couche fonctionnelle est constituée d'argent.

8. Système de couches selon l'une des revendications précédentes, **caractérisé en ce que** le substrat est constitué de verre flotté.

9. Système de couches selon l'une des revendications précédentes, **caractérisé en ce que** le système de couches est configuré de telle sorte que la variation de valeur chromatique, provoquée par le processus de précontrainte, DE:=$(DL^2+Da^{*2}+Db^{*2})^{1/2}$ selon DIN 5033-3 soit, tant en réflexion qu'en transmission, est < 3, de préférence < 2, d'une manière particulièrement préférée < 1,0.

10. Système de couches isolant thermique selon l'une des revendications précédentes, **caractérisé en ce que** la couche d'oxynitrure de métal est amorphe.

# Figur 1

# Figur 2

Einfach-Ag-System mit
Nb-Blocker
- - - - Ungehärtet
——— Gehärtet (10 min bei 650 °C)

Reflexion, Transmission [%]

Wellenlänge λ [nm]

# Figur 3

Einfach-Ag-System mit
NbN$_x$O$_y$-Blocker
- - - - Ungehärtet
——— Gehärtet (10 min bei 650 °C)

Reflexion, Transmission [%]

Wellenlänge λ [nm]

# Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4548691 A
- US 4894290 A
- EP 1060140 B1
- EP 999192 B1
- US 6623846 B2
- EP 1529761 A1
- EP 803481 B1
- EP 488048 B1
- EP 1007756 B1
- EP 678484 B1

**In der Beschreibung aufgeführte Nicht-Patentliteratur**

- **B. HARBECKE.** *Appl. Phys.,* 1986, vol. B39, 165-170